# EUROPÄISCHE PATENTSCHRIFT

(11) **EP 3 721 964 B1**
(45) Veröffentlichungstag und Bekanntmachung des Hinweises auf die Patenterteilung: **29.04.2026**
(21) Anmeldenummer: 19195274.6
(22) Anmeldetag: 04.09.2019
(51) Int. Cl.: D01D 13/00, B01D 39/08

(54) **FLACHMATERIAL, FILTERELEMENT, FILTER UND VERFAHREN ZUR HERSTELLUNG EINES FLACHMATERIALS**
FLAT MATERIAL, FILTER ELEMENT, FILTER AND METHOD FOR PRODUCING A FLAT MATERIAL
MATÉRIAU PLAT, ÉLÉMENT FILTRANT, FILTRE ET PROCÉDÉ DE FABRICATION D'UN MATÉRIAU PLAT

(30) Priorität: 11.04.2019 DE 102019109617; 11.04.2019 DE 202019102088 U
(43) Veröffentlichungstag der Anmeldung: 14.10.2020
(73) Patentinhaber: ARGO-HYTOS Group AG, 6340 Baar (CH)
(72) Erfinder: WARTLICK, Karl, 75038 Oberderdingen (DE)
(74) Vertreter: Meissner Bolte Partnerschaft mbB

(56) Entgegenhaltungen:
- EP-A1- 3 302 113
- WO-A1-2016/196009
- WO-A2-2009/026978
- CN-U- 204 509 608
- DE-A1- 102010 025 218

## Beschreibung

Die Erfindung betrifft ein gewelltes oder gefaltetes Flachmaterial eines Filterelements mit den Merkmalen des Oberbegriffs des Anspruchs 1. Ein derartiges Flachmaterial ist beispielsweise aus WO 2009/026978 A2 bekannt. Die Erfindung betrifft ferner ein Filterelement, einen Filter und ein Verfahren zur Herstellung des Flachmaterials. Dokument CN 204 509 608 U offenbart eine Gewebelage mit wenigstens zwei Gewebestreifen.

Mittels derartiger Flachmaterialien können einer Flüssigkeit Fremdstoffe, beispielsweise verunreinigende Partikel, entzogen werden, so dass der Gehalt an Fremdstoffen in der Flüssigkeit durch das Hindurchströmen durch das Flachmaterial reduziert werden kann. Um die wirksame Fläche des Flachmaterials zu erhöhen, wird dieses gefaltet oder gewellt. Dadurch wird die effektiv nutzbare Fläche erhöht, ohne dass die Außenabmessungen des Flachmaterials vergrößert werden müssen. Ein derartiges Flachmaterial wird auch Filterbalg genannt. Die Belastung des Flachmaterials durch das hindurchströmende Fluid kann zur Folge haben, dass sich die Falten oder Wellen auf der Abströmseite des Flachmaterials dicht aneinander legen. Dies erhöht den Durchflusswiderstand des Flachmaterials und damit den Druckverlust des Fluids beim Durchströmen des Flachmaterials. Bei dem bekannten Flachmaterial ist daher vorgesehen, dass die Gewebelage verformbar ist und eine Köperbindung aufweist. Dadurch wird die mechanische Belastbarkeit eines mit einer derartigen Gewebelage hergestellten, gewellten oder gefalteten Flachmaterials gesteigert und die Gefahr einer Beschädigung bei Druckwechselbelastungen verringert. Trotz der hohen mechanischen Belastbarkeit zeichnet sich das bekannte Flachmaterial durch einen geringen Durchflusswiderstand aufgrund der Köperbindung aus.

Bei der Verarbeitung der bekannten Gewebelage zu einem Flachmaterial kann es zu Nacharbeitsaufwand kommen, da sich die Fäden der Gewebelage während der Verarbeitung an bestimmten Stellen aus der Gewebelage lokal lösen können.

Der Erfindung liegt die Aufgabe zugrunde, ein gewelltes oder gefaltetes Flachmaterial eines Filterelements dahingehend zu verbessern, dass die Verarbeitung der Gewebelage vereinfacht wird. Der Erfindung liegt ferner die Aufgabe zugrunde, ein Filterelement, einen Filter und ein Verfahren zur Herstellung eines Flachmaterials anzugeben.

Erfindungsgemäß wird diese Aufgabe mit Blick auf das Flachmaterial durch den Gegenstand des Anspruchs 1 gelöst. Die Aufgabe wird mit Blick auf das Filterelement durch den Gegenstand des Anspruchs 9, mit Blick auf den Filter durch den Gegenstand des Anspruchs 12 und mit Blick auf das Verfahren durch den Gegenstand des Anspruchs 13 gelöst.

Konkret wird die Aufgabe durch ein Flachmaterial nach Anspruch 1 gelöst.

Die Vorteile der Erfindung werden nachstehend anhand der Gewebestreifen beschrieben.

Die Erfindung hat den Vorteil, dass lokal unterschiedliche Funktionen oder Eigenschaften der Gewebelage durch die Wahl der entsprechenden Bindungsart eingestellt werden können. Dies wird dadurch erreicht, dass im Übergang vom ersten auf den zweiten Gewebestreifen die Bindungsart der Gewebelage wechselt. Der Wechsel der Bindungsarten ermöglicht eine andere Funktion oder Eigenschaft im Bereich der ersten Bindungsart der Gewebelage als im Bereich der zweiten Bindungsart der Gewebelage, da sich die erste und zweite Bindungsart voneinander unterscheiden.

Beispielsweise ist es möglich, in den bei der Verarbeitung der Gewebelage kritischen Bereichen eine von der ersten Bindungsart unterschiedliche zweite Bindungsart einzusetzen, die eine bessere Fixierung der Fäden in der Gewebelage als im Bereich der ersten Bindungsart ermöglicht. Dadurch wird die Verarbeitung der Gewebelage vereinfacht, da eine Nachbearbeitung des Flachmaterials zumindest hinsichtlich der Gewebelage entfällt.

Die Erfindung ist nicht auf die Vereinfachung der Verarbeitung eingeschränkt. Vielmehr erlaubt die Erfindung ganz allgemein die lokale Einstellung bestimmter Funktionen oder Eigenschaften der Gewebelage wodurch beispielsweise die Leistungsfähigkeit des Filterelements verbessert werden kann. Dies wird durch die unterschiedlichen Bindungsarten der Gewebelage erreicht.

Die Erfindung ist nicht auf zwei verschiedene Bindungsarten eingeschränkt. Es ist möglich, dass mehr als zwei, beispielsweise drei oder vier Bindungsarten eingesetzt werden, die sich jeweils von der ersten Bindungsart unterscheiden.

Bevorzugte Ausführungsformen der Erfindung sind in den Unteransprüchen angegeben.

Bei einer besonders bevorzugten Ausführungsform bildet der zweite Gewebestreifen eine Fixierbindung, die die Fäden, insbesondere die Kettfäden des ersten Gewebestreifens fixiert. Diese Ausführungsform ist besonders geeignet, die Verarbeitung der Gewebelage zu vereinfachen, weil durch die zweite Bindungsart die Fäden daran gehindert werden, sich aus der Gewebelage zu lösen. Gerade für die Fixierung der Randfäden der Gewebelage ist diese Ausführungsform besonders geeignet.

Vorzugsweise umfasst die zweite Bindungsart des zweiten Gewebestreifens eine Leinenbindung (auch Leinwandbindung genannt) oder eine Dreherbindung. Es hat sich gezeigt, dass die Leinenbindung oder die Dreherbindung eine bessere Fixierung der Fäden, insbesondere der Kettfäden in der Gewebelage ermöglichen, als beispielsweise eine Köperbindung. Durch die Kombination der unterschiedlichen Bindungsarten werden die optimalen Eigenschaften der jeweiligen Bindungsart beibehalten und gezielt zur Verbesserung der Eigenschaften der Gewebelage eingesetzt.

Bei einer weiteren bevorzugten Ausführungsform bildet der zweite Gewebestreifen den Rand, insbesondere den stirnseitigen Rand der Gewebelage. Weiter vorzugsweise bildet jeweils ein zweiter Gewebestreifen die beiden stirnseitigen Ränder der Gewebelage. Unter einem stirnseitigen Rand der Gewebelage wird derjenige Rand verstanden, der bei dem Flachmaterial, in das die Gewebelage integriert ist, in axialer Richtung des Filterelements stirnseitig, d. h. im Bereich der jeweiligen Endscheibe des Filterelements angeordnet ist. Mit anderen Worten bildet der stirnseitige Rand des im montierten Zustand zylindrischen Flachmaterials die Oberkante bzw. die Unterkante des Flachmaterials.

In diesem Bereich ist die Fixierung der Kettfäden relevant, sodass diese Ausführungsform die Verarbeitung der Gewebelage besonders vereinfacht.

Vorzugsweise sind mehrere zweite Gewebestreifen mit Abstand angeordnet, wobei ein erster Gewebestreifen zwischen zwei zweiten Gewebestreifen angeordnet ist. Diese Ausführungsform umfasst unterschiedliche Varianten. Beispielsweise können die beiden stirnseitigen Ränder der Gewebelage durch jeweils einen zweiten Gewebestreifen gebildet sein, wobei zwischen den beiden zweiten Gewebestreifen ein erster Gewebestreifen angeordnet ist. Diese Ausführungsform ist in erster Linie dazu vorgesehen, die Verarbeitung der Gewebelage zu vereinfachen. Es ist auch möglich, dass drei oder mehr zweite Gewebestreifen vorgesehen sind, zwischen denen jeweils ein erster Gewebestreifen angeordnet ist, um unterschiedliche Funktionsbereiche der Gewebelage zu bilden. Außerdem wird durch diese Ausführungsform ein Zwischenprodukt der Gewebelage geschützt, das durch entsprechenden Zuschnitt in das Endprodukt überführt wird, also bspw. eine Gewebelage mit zwei zweiten Gewebestreifen und einem ersten Gewebestreifen dazwischen.

Der erste Gewebestreifen, insbesondere das Hauptgewebe, kann eine größere Fläche als der zweite Gewebestreifen aufweisen. Dadurch werden die Strömungseigenschaften des Flachmaterials hauptsächlich durch den ersten Gewebestreifen der Gewebelage bestimmt.

Der erste Gewebestreifen bildet in einer weiteren Ausführungsform im Gebrauch einen Durchströmungsbereich des gewellten oder gefalteten Flachmaterials, der von dem Fluid durchströmbar ist, wobei der Durchströmungsbereich einen Strömungswiderstand aufweist, der kleiner als der Strömungswiderstand des zweiten Gewebestreifens ist.

Bei besonders bevorzugten Ausführungsform umfasst die erste Bindungsart des ersten Gewebestreifens, insbesondere des Hauptgewebes, eine Köperbindung, insbesondere eine Wechselköperbindung, insbesondere eine Fischgratköperbindung, oder eine Atlasbindung. Die Köperbindung hat den Vorteil, dass die mechanische Belastbarkeit des mit einer derartigen Gewebelage hergestellten, gewellten oder gefalteten Flachmaterials gesteigert und die Gefahr einer Beschädigung bei Druckwechselbelastungen verringert wird. Außerdem weist das so gebildete Flachmaterial einen geringen Durchflusswiderstand auf. Besonders bevorzugt ist die Kombination einer Köperbindung für den ersten Gewebestreifen und einer Leinwandbindung oder Dreherbindung für den zweiten Gewebestreifen. Die Erfindung ist nicht auf diese Kombination eingeschränkt, sondern erstreckt sich auch auf andere Kombinationen von Bindungsarten.

Der erste Gewebestreifen, insbesondere das Hauptgewebe, und/oder der zweite Gewebestreifen kann ein Hybridgewebe mit ersten und zweiten Fäden bilden, wobei die ersten Fäden, insbesondere die Kettfäden, aus Kunststoff und die zweiten Fäden, insbesondere die Schussfäden aus Metall gebildet sind. Dadurch wird die Lebensdauer des Flachmaterials verlängert.

Bei einer bevorzugten Ausführungsform des Filterelements weist das Flachmaterial eine hohlzylindrische Form auf und ist an wenigstens einer Stirnseite mit einer Endscheibe verbunden. Ein zweiter Gewebestreifen der Gewebelage ist von der Endscheibe zumindest teilweise bedeckt. Dadurch wird vorteilhafterweise erreicht, dass beispielsweise im Fall der Fixierung der Randfäden der zweite Gewebestreifen mit der zweiten Bindungsart kein Teil der wirksamen Oberfläche des Filterelements ist, also nicht von Fluid durchströmt wird.

Der zweite Gewebestreifen kann zumindest teilweise im Kleberbett der Endscheibe angeordnet werden und liegt somit in einem Bereich des Filterelements der nicht durchströmt wird. Der Nachteil des zweiten Gewebestreifens hinsichtlich des Durchstömungsverhaltens wirkt sich daher nicht auf den Druckverlust des Filterelementes aus.

Der beanspruchte Filter weist ein erfindungsgemäßes Filterelement auf, d. h. ein Filterelement mit einem erfindungsgemäßen Flachmaterial.

Bei dem erfindungsgemäßen Verfahren zur Herstellung eines gewellten oder gefalteten Flachmaterials eines Filterelements werden ein erster Gewebestreifen und wenigstens ein zweiter Gewebestreifen gewebt, deren Fäden, insbesondere Schussfäden, ineinander übergehen. Dabei wird von einer ersten Bindungsart des ersten Gewebestreifens auf eine zweite Bindungsart des zweiten Gewebestreifens beim Weben gewechselt. Die zweite Bindungsart unterscheidet sich von der ersten Bindungsart.

Weiter wird eine Funktionsschicht des Flachmaterials mit der Gewebelage verbunden.

Die Erfindung wird nachstehend anhand eines Ausführungsbeispiels mit weiteren Einzelheiten unter Bezug auf die beigefügten schematischen Zeichnungen näher erläutert.

In diesen zeigen:
- Fig. 1: eine perspektivische Ansicht eines Filterelements mit teilweise geschnittenem Filterbalg bzw. gefaltetem Flachmaterial;
- Fig. 2: eine perspektivische Ansicht einer Gewebelage nach einem erfindungsgemäßen Ausführungsbeispiel bei der Herstellung, die in den Filterbalg gemäß Fig. 1 integriert ist;
- Fig. 3: einen Ausschnitt eines zweiten Gewebestreifens der Gewebelage nach Fig. 2, bei der die Bindungsart "Leinwandbindung" realisiert ist;
- Fig. 4: einen Schnitt des zweiten Gewebestreifens mit der Bindungsart "Leinwandbindung" gemäß Fig. 2 und
- Fig. 5: einen Schnitt des ersten Gewebestreifens mit der Bindungsart "Köperbindung" gemäß Fig. 2.

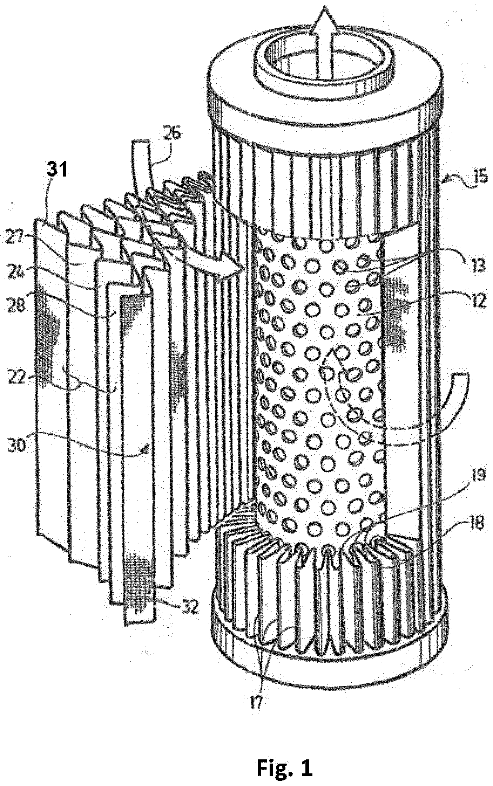

In Fig. 1 ist schematisch ein Filterelement dargestellt, das beispielsweise in einem Hydraulikfilter zum Einsatz kommt. Der Einsatz in einem Hydraulikfilter ist besonders bevorzugt. Es ist möglich, das Filterelement in anderen Filtern einzusetzen. Es umfasst eine Lochzarge bzw. ein zylinderförmiges Stützrohr 12, das in radialer Richtung von einer Vielzahl von Durchflussöffnungen 13 durchsetzt ist. In Umfangsrichtung ist das Stützrohr 12 von einem mehrlagigen Filterbalg 15 umgeben, der in Fig. 1 zur Verdeutlichung teilweise nach Art einer Explosionszeichnung dargestellt ist. Der Filterbalg 15 kann auch als gewelltes oder gefaltetes Flachmaterial bezeichnet werden. Der Filterbalg 15 ist durch parallel zur Längsachse des Stützrohres 12 verlaufende Falten 17 sternförmig so gefaltet, dass längs seines Umfangs radial außenliegende Faltenspitzen 18 und radial innenliegende Faltengründe 19 abwechselnd aufeinander folgen.

Der Filterbalg 15 weist konkret ein dreilagiges Filtermaterial 22 auf mit einer Feinfilterschicht in Form eines Vlieses 24, das in Durchströmrichtung 26, in der dargestellten Ausführungsform also in radialer Richtung von außen nach innen, rohseitig von einem Vorfiltervlies 27 und reinseitig von einem Schutzvlies 28 abgedeckt ist. Die Vliese können beispielsweise aus einem Kunststoff- oder Glasfasermaterial gefertigt sein. Die Erfindung ist nicht auf ein derartiges Filtermaterial eingeschränkt, sondern ist auch für andere Filtermaterialien geeignet, die zur Filtration vorgesehen sind, bspw. mit mehr oder weniger als drei Lagen.

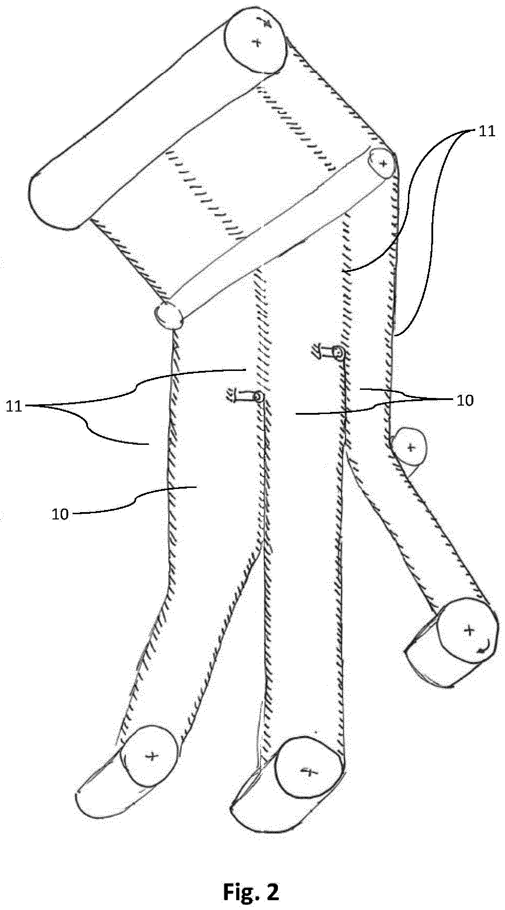

In Durchströmrichtung 26 stützt sich das Filtermaterial 22 reinseitig an einem Stützgewebe 30 ab, welches flächig am Schutzvlies 28 des Filtermaterials 22 anliegt und ebenfalls sternförmig gefaltet ist. Das Stützgewebe 30 wiederum stützt sich in Durchströmrichtung 26 im Bereich der Faltengründe 19 am Stützrohr 12 ab. Rohseitig, d. h. radial außen ist ein Schutzgewebe 31 angeordnet, das flächig am Vorfiltervlies 27 des Filtermaterials 22 anliegt und ebenfalls sternförmig gefaltet ist. Das Stützgewebe 30 und das Schutzgewebe 31 sind jeweils aus einer Gewebelage nach dem Ausführungsbeispiel hergestellt, das anhand Fig. 2 näher erläutert wird. Es ist möglich, dass nur das Stützgewebe 30 oder nur das Schutzgewebe 31 aus der nachstehend näher beschriebenen Gewebelage hergestellt sind.

In Fig. 2 ist dargestellt, dass die Gewebelage nach dem erfindungsgemäßen Ausführungsbeispiel einen ersten Gewebestreifen 10 aufweist. Der erste Gewebestreifen 10 kann auch als Hauptgewebe bezeichnet werden. Das Hauptgewebe zeichnet sich dadurch aus, dass dieses die Hauptfunktion des Filterelements, nämlich die für die Filtration erforderliche Durchströmung des Filtermaterials 22 ermöglicht. Daher weist der erste Gewebestreifen 10 eine besonders große effektive Fläche auf. Der erste Gewebestreifen 10 erstreckt sich in Längsrichtung der Gewebelage gemäß Fig. 2. Im montierten Zustand, d. h. im Filterelement erstreckt sich der erste Gewebestreifen 10 in Umfangsrichtung des Filterelements.

Der erste Gewebestreifen 10 geht in einen zweiten Gewebestreifen 11 über, der sich im Wesentlichen parallel zum ersten Gewebestreifen 10 erstreckt. Es ist möglich, dass der zweite Gewebestreifen 11 einen Versatz von wenigstens einem Kettfaden, insbesondere von mehreren Kettfäden, aufweist. Alternativ ist ein Zick-Zack-förmiger Verlauf des zweiten Gewebestreifens 11 möglich. Konkret gehen die Schussfäden des ersten Gewebestreifen 10 in die Schussfäden des zweiten Gewebestreifen 11 über. Die beiden Gewebestreifen 10, 11 verwenden also dieselben Schussfäden und bilden somit eine einheitliche bzw. zusammenhängende Gewebelage, die sich zumindest im Herstellungszustand in ein und derselben Ebene erstreckt. Wenn die Gewebelage in das Flachmaterial bzw. den Filterbalg 15 integriert ist, bildet diese dieselbe sternförmige Kontur, wie das Filtermaterial 22. Das Flachmaterial und somit die Gewebelage ist gewellt bzw. gefaltet.

Wie in Fig. 2 durch die Schraffierung angedeutet, weist der erste Gewebestreifen 10 eine erste Bindungsart und der zweite Gewebestreifen 11 eine zweite Bindungsart auf, die sich von der ersten Bindungsart unterscheidet. Dadurch wird erreicht, dass in den Bereichen des ersten Gewebestreifens 10 und des zweiten Gewebestreifens 11 unterschiedliche Eigenschaften der Gewebelage eingestellt werden. Beispielsweise können die Fäden der Gewebelage im Bereich der zweiten Gewebestreifen 11 durch die zweite Bindungsart stärker fixiert werden, als die Fäden der Gewebelage im Bereich des ersten Gewebestreifen 10.

Wie in Fig. 2 zu erkennen, kann eine unterschiedliche Anzahl von ersten und zweiten Gewebestreifen 10, 11 vorgesehen sein. Im Beispiel gemäß Fig. 2 sind drei erste Gewebestreifen 10 und vier zweite Gewebestreifen 11 vorgesehen, wobei sich die ersten Gewebestreifen 10 jeweils zwischen zwei zweiten Gewebestreifen 11 erstrecken.

Im Beispiel gemäß Fig. 2 wird die gesamte Gewebelage so zugeschnitten, dass Teilgewebelagen entstehen, die jeweils einen ersten Gewebestreifen 10 und zwei zweite Gewebestreifen 11 aufweisen, die sich entlang der Ränder der Gewebelage erstrecken. Im Gebrauch bilden die Ränder der Teilgewebelagen die stirnseitigen Ränder des Faltenbalgs 15, wie in Fig. 1 zu sehen. Bei dem Beispiel gemäß Fig. 2 werden drei Teilgewebelagen gebildet. Die Breite der Teilgewebelagen kann sich unterscheiden. Die Breite hängt vom Abstand der zweiten Gewebestreifen 11 zueinander ab. Dies hat den Vorteil, dass die Gewebelage für unterschiedliche Filterbalggrößen konfektioniert werden kann.

Es ist auch möglich, eine einzige Gewebelage mit mehreren ersten Gewebestreifen 10 herzustellen, die durch zweite Gewebestreifen 11 getrennt sind, ähnlich wie die Gesamtgewebelage vor dem Zuschnitt, also das ungeschnittene Gewebe 3. Dadurch kann das Filterelement unterschiedliche Durchströmungsbereiche mit unterschiedlichen Eigenschaften aufweisen, die durch die geeignete Wahl der jeweiligen Bindungsart für die ersten und zweiten Gewebestreifen 10, 11 eingestellt werden.

Bei dem Ausführungsbeispiel gemäß Fig. 2 ist das Hauptgewebe, also der erste Gewebestreifen 10 in der Bindungsart "Köperbindung" hergestellt. Die zweiten Gewebestreifen 11 sind jeweils in der Bindungsart "Leinwandbindung" hergestellt.

Andere Kombinationen von Bindungsarten sind möglich. So kann die erste Bindungsart des ersten Gewebestreifen 10 konkret eine Wechselköperbindung oder eine Fischgratköperbindung aufweisen. Es ist auch möglich, dass die erste Bindungsart eine Atlasbindung umfasst. Die zweite Bindungsart kann eine Leinenbindung oder Leinwandbindung, wie in Fig. 2, oder eine Dreherbindung umfassen. Diese zweiten Bindungsarten zeichnen sich dadurch aus, dass diese die Kettfäden gut in der Gewebelage fixieren (Fixierbindung).

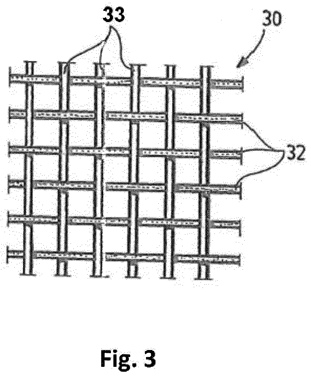

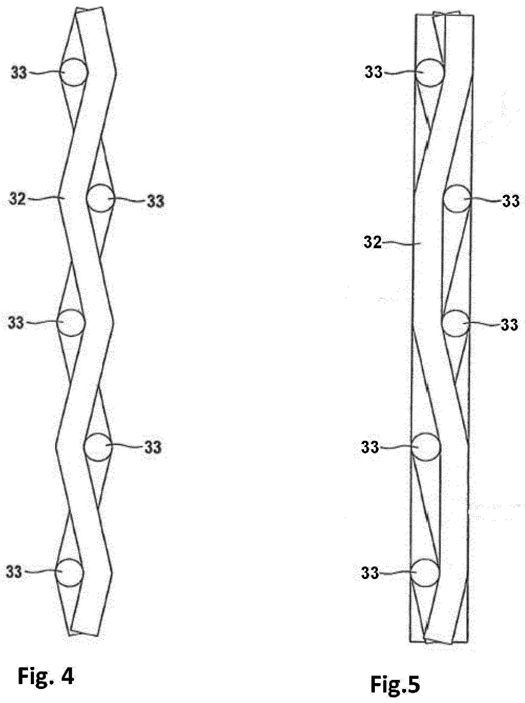

Ein Beispiel für eine Leinwandbildung (zweite Bindungsart) ist in Fig. 3 und Fig. 4 dargestellt. Bei der Leinwandbindung verläuft der Schussfaden 32 abwechselnd über und unter einem Kettfaden 33. Die Überkreuzungen der Schussfäden 32 und der Kettfäden 33 erfolgt nach einem 1:1-Muster. Die zweiten Gewebestreifen 11 zeichnen sich durch eine hohe Schiebefestigkeit aus. Die Fäden, insbesondere die Kettfäden der zweiten Gewebestreifen 11 sind durch die Leinwandbindung gut im Gewebeverbund fixiert.

Ein Beispiel für eine Köperbindung (erste Bindungsart) ist in Fig. 5 gezeigt. Im Gegensatz zur Leinwandbindung gemäß Fig. 4 verläuft der Schussfaden 32 des ersten Gewebestreifens 10 unter zwei Kettfäden 33 hindurch, um danach über zwei Kettfäden 33 hinweg zu verlaufen, dann wieder zwei Kettfäden 33 zu untergreifen und so weiter. Der unmittelbar benachbarte Schussfaden verlagert diesen Rhythmus um eins zur Seite. Schusshebungen 38 erstrecken sich somit über zwei benachbarte Kettfäden, entsprechendes gilt für Schusssenkungen 39.

Kommen zwei Lagen der zum Einsatz kommenden Gewebelage mit Köperbindung im Bereich des ersten Gewebestreifen 10 bzw. in den Bereichen der ersten Gewebestreifen 10 durch Falten- oder Wellenbildung unmittelbar aneinander zur Anlage, so liegen in Abströmrichtung hervorstehende Faden- oder Filamentabschnitte, insbesondere einander zugewandte und sich kreuzende Kett- und Schusshebungen, aneinander an. Die Gesamtdicke der durch Falten- oder Wellenbildung aneinander liegenden Lagen des Gewebes mit Köperbindung ist höher als die Gesamtdicke der durch Falten- oder Wellenbildung aneinander anliegenden Lagen des Gewebes mit Leinwandbindung. Zwischen den durch Falten- oder Wellenbildung aneinander anliegenden Lagen des Gewebes mit Köperbindung bilden sich Mikrokanäle aus, die auch durch eine leichte Relativbewegung der beiden Lagen nicht beeinträchtigt werden, sondern ihre Ausgestaltung stabil beibehalten.

Durch die Kombination der unterschiedlichen Bindungsarten werden also lokal unterschiedliche Eigenschaften der Gewebelage eingestellt, die beispielsweise im Fall der Leinwandbindung an den Rändern der Gewebelage den Nacharbeitsaufwand bei der Herstellung der Filterelemente wesentlich verringern, weil die Randfäden im Gewebeverbund fixiert sind.

Hinzu kommt, dass die Anordnung der zweiten Gewebestreifen 11 an den stirnseitigen Rändern der Gewebelage, wie in Fig. 2 gezeigt, dazu führt, dass die Bereiche mit der zweiten Bindungsart, also die zweiten Gewebestreifen 11 in die Endscheiben 38, 40 eintauchen und somit nicht an der effektiven Durchströmungsfläche des Filterelements teilnehmen.

Zusammengefasst ist die Gewebelage nicht durchgängig in ein und derselben Bindungsart gewebt, beispielsweise in Köperbindung, wie im Stand der Technik. Vielmehr ist an den Stellen, an denen die Gewebelage später zugeschnitten wird, d. h. auf definierten Bandbreiten, jeweils ein Streifen mit einer bestimmten Anzahl an Kettfäden in einer anderen Bindungsart, insbesondere in Leinenbindung bzw. Leinwandbindung gewebt. Der Hauptvorteil besteht darin, dass durch die Leinenbindung am Rand der Randfaden durch den häufigeren Wechsel, d. h. die häufigere Kröpfung des Fadens, sehr viel besser im Gewebe fixiert ist als bei einer reinen Köperbindung. Dadurch neigt der Randfaden sehr viel weniger dazu, aus dem Gewebe heraus zu springen oder herausgezogen zu werden.

Im Rahmen der Erfindung wird das Filterelement mit einem Filterbalg beansprucht, in den wenigstens eine Gewebelage nach dem Ausführungsbeispiel integriert ist. Konkret enthält der Filterbalg mehrere Material-Lagen, die miteinander gefaltet werden, um ein sternförmiges Muster zu bilden. Eine oder zwei dieser Lagen (an- oder abströmseitig) bestehen aus einem Körpergewebe, das sich auf die Leistungsdaten und im speziellen den Druckverlust des Filterelements positiv auswirkt. Konkret ist der erste Gewebestreifen 10 so ausgebildet. Der an sich bestehende Nachteil des bezüglich des Druckverlustes optimierten Gewebes besteht darin, dass die Randfäden in der Köperbindung wenig im Gewebe gebunden sind, sodass während des Faltprozesses und nachgeschalteten Verarbeitungsschritten, wie zum Beispiel dem Vereinzeln der Faltenbälge die Randfäden nicht ausreichend gut im Gewebeverbund gehalten werden, wodurch zusätzliche Nacharbeit entsteht.

Das für das Hauptgewebe verwendete Körpergewebe bzw. allgemein der erste Gewebestreifen mit der ersten Bindungsart wird dadurch ergänzt, dass an den Rändern bzw. dort, wo nach dem Weben auf kleinere Bandbreiten geschnitten wird, eine zweite Bindungsart eingesetzt wird, konkret die Leinwandbindung. Dabei wird die Anzahl der Kettfäden, die in die Leinwandbindung gewoben werden, idealerweise maximal so gewählt, dass dieser Teil des Gewebes im Kleberbett der Endscheiben des Filterelements verschwinden und damit die Leistungsdaten des Filterelements nicht beeinflussen.

Es können zusätzlich auch weitere Zonen bzw. Streifen mit Leinwandbindung zwischen den eigentlichen Schneidgassen eingebracht werden, um zum Beispiel nach dem Weben flexiblere Möglichkeiten zu schaffen, um auf unterschiedliche Bandbreiten zuschneiden zu können. Anstelle der Leinwandbindung am Rand, d. h. im zweiten Gewebestreifen, können am Rand auch andere von der eigentlichen ersten Bindungsart des Gewebes abweichende Bindungsarten infrage kommen, die den Randfaden deutlich besser im Gewebe halten als die Köperbindung. Hier kommt beispielsweise die Dreherbindung infrage. Die manuelle Nacharbeit durch Herausspringen der Randfäden entfällt, woraus eine signifikante Produktionsverbesserung für die Filterelementfertigung zu verzeichnen ist.

### Bezugszeichenliste

- 1: Mutterrolle
- 2: Rolle für Zuschnitt
- 3: ungeschnittenes Gewebe
- 4: Schneidmesser
- 10: erster Gewebestreifen
- 11: zweiter Gewebestreifen
- 12: Stützrohr
- 13: Durchflussöffnungen
- 14: frei
- 15: Filterbalg
- 16: frei
- 17: Falten
- 18: Faltenspitzen
- 19: Faltengründe
- 20: frei
- 21: frei
- 22: Filtermaterial
- 23: frei
- 24: Vlies
- 25: frei
- 26: Durchströmrichtung
- 27: Vorfiltervlies
- 28: Schutzvlies
- 29: frei
- 30: Stützgewebe
- 31: Schutzgewebe
- 32: Schussfaden
- 33: Kettfaden

## Patentansprüche

1. Flachmaterial für ein Filterelement, wobei das Flachmaterial eine gewellte oder gefaltete Form mit einer Vielzahl von parallel zueinander verlaufenden Falten (17) oder Wellen aufweist, die aufeinander folgende Falten- oder Wellenspitzen (18) und Falten- oder Wellentäler (19) bilden, die jeweils durch eine Faltenflanke miteinander verbunden sind, wobei das Flachmaterial von einem Fluid durchströmbar ist und mindestens eine Funktionsschicht zum Entfernen von Fremdstoffen aus dem Fluid aufweist, wobei die Funktionsschicht mit wenigstens einer Gewebelage verbunden ist, die einen ersten Gewebestreifen (10), insbesondere ein Hauptgewebe, und wenigstens einen zweiten Gewebestreifen (11) aufweist, deren Fäden, insbesondere Schussfäden (32), ineinander übergehen, wobei der erste Gewebestreifen (10) eine erste Bindungsart und der zweite Gewebestreifen (11) eine zweite Bindungsart aufweisen, die sich von der ersten Bindungsart unterscheidet.

2. Flachmaterial nach Anspruch 1
**dadurch gekennzeichnet, dass**
der zweite Gewebestreifen (11) eine Fixierbindung bildet, die die Fäden, insbesondere Kettfäden (33), des ersten Gewebestreifens (10) fixiert, wobei die zweite Bindungsart des zweiten Gewebestreifens (11) eine Leinenbindung oder eine Dreherbindung umfasst.

3. Flachmaterial nach Anspruch 1 oder 2
**dadurch gekennzeichnet, dass**
der zweite Gewebestreifen (11) den stirnseitigen Rand der Gewebelage bildet.

4. Flachmaterial nach einem der vorhergehenden Ansprüche
**dadurch gekennzeichnet, dass**
mehrere zweite Gewebestreifen (11) mit Abstand angeordnet sind, wobei ein erster Gewebestreifen (10) zwischen zwei zweiten Gewebestreifen (11) angeordnet ist.

5. Flachmaterial nach einem der vorhergehenden Ansprüche
**dadurch gekennzeichnet, dass**
der erste Gewebestreifen (10), insbesondere das Hauptgewebe, eine größere Fläche als der zweite Gewebestreifen (11) aufweist.

6. Flachmaterial nach einem der vorhergehenden Ansprüche
**dadurch gekennzeichnet, dass**
der erste Gewebestreifen (10), insbesondere das Hauptgewebe, im Gebrauch einen Durchströmungsbereich des gewellten oder gefalteten Flachmaterials bildet, der von dem Fluid durchströmbar ist, wobei der Durchströmungsbereich einen Strömungswiderstand aufweist, der kleiner als der Strömungswiderstand des zweiten Gewebestreifens (11) ist.

7. Flachmaterial nach einem der vorhergehenden Ansprüche
**dadurch gekennzeichnet, dass**
die erste Bindungsart des ersten Gewebestreifens (10), insbesondere des Hauptgewebes, eine Köperbindung, insbesondere Wechselköperbindung, insbesondere Fischgratköper, oder eine Atlasbindung umfasst.

8. Flachmaterial nach einem der vorhergehenden Ansprüche
**dadurch gekennzeichnet, dass**
der erste Gewebestreifen (10), insbesondere das Hauptgewebe, und/oder der zweite Gewebestreifen (11) ein Hybridgewebe mit ersten und zweiten Fäden bildet/bilden, wobei die ersten Fäden, insbesondere Kettfäden (33), aus Kunststoff und die zweiten Fäden, insbesondere Schussfäden (32), aus Metall gebildet sind.

9. Filterelement mit einem Flachmaterial nach Anspruch 1.

10. Filterelement nach Anspruch 9
**dadurch gekennzeichnet, dass**
das Flachmaterial eine hohlzylindrische Form aufweist und an wenigstens einer Stirnseite mit einer Endscheibe verbunden ist, wobei ein zweiter Gewebestreifen (11) von der Endscheibe zumindest teilweise bedeckt ist.

11. Filterelement nach Anspruch 10
**dadurch gekennzeichnet, dass**
der zweite Gewebestreifen (11) zumindest teilweise im Kleberbett der Endscheibe angeordnet ist.

12. Filter, insbesondere Hydraulikfilter, mit einem Filterelement nach Anspruch 9.

13. Verfahren zur Herstellung eines Flachmaterials für ein Filterelement nach Anspruch 1, bei dem eine Funktionsschicht des Flachmaterials mit einer Gewebelage verbunden wird, wobei zur Herstellung der Gewebelage, insbesondere eines Schutzgewebes (31) und/oder Stützgewebes (30) ein erster Gewebestreifen (10) und wenigstens ein zweiter Gewebestreifen (11) gewebt werden, deren Fäden, insbesondere Schussfäden (32), ineinander übergehen, wobei von einer ersten Bindungsart des ersten Gewebestreifens (10) auf eine zweite Bindungsart des zweiten Gewebestreifens (11) beim Weben gewechselt wird, die sich von der ersten Bindungsart unterscheidet.

## Claims

1. A flat material for a filter element, wherein the flat material has a corrugated or pleated shape with a plurality of pleats (17) or corrugations running parallel to each other, which form successive pleat or corrugation peaks (18) and pleat or corrugation troughs (19), which are each connected to each other by a pleat flank, wherein the flat material, through which a fluid can flow, has at least one functional layer for removing foreign substances from the fluid, wherein the functional layer is connected to at least one fabric layer which has a first fabric strip (10), in particular a main fabric, and at least one second fabric strip (11), the threads of which, in particular weft threads (32), merge into one another, wherein the first fabric strip (10) has a first type of weave and the second fabric strip (11) has a second type of weave that differs from the first type of weave.

2. The flat material according to claim 1,
**characterized in that**
the second fabric strip (11) forms a fixing weave which fixes the threads, in particular warp threads (33), of the first fabric strip (10), wherein the second type of weave of the second fabric strip (11) comprises a linen weave or a leno weave.

3. The flat material according to claim 1 or 2,
**characterized in that**
the second fabric strip (11) forms the front-face edge of the fabric layer.

4. The flat material according to any one of the preceding claims,
**characterized in that**
a plurality of second fabric strips (11) is arranged spaced apart from one another, wherein a first fabric strip (10) is arranged between two second fabric strips (11) .

5. The flat material according to any one of the preceding claims, **characterized in that** the first fabric strip (10), in particular the main fabric, has a larger area than the second fabric strip (11).

6. The flat material according to any one of the preceding claims,
**characterized in that**
the first fabric strip (10), in particular the main fabric, forms during use a flow region of the corrugated or pleated flat material through which the fluid can flow, wherein the flow region has a flow resistance that is less than the flow resistance of the second fabric strip (11).

7. The flat material according to any one of the preceding claims,
**characterized in that**
the first type of weave of the first fabric strip (10), in particular the main fabric, comprises a twill weave, in particular an alternating twill weave, in particular a herringbone twill weave, or an atlas weave.

8. The flat material according to any one of the preceding claims,
**characterized in that**
the first fabric strip (10), in particular the main fabric, and/or the second fabric strip (11) form/forms a hybrid fabric with first and second threads, wherein the first threads, in particular warp threads (33), are formed from plastics and the second threads, in particular weft threads (32), are formed from metal.

9. A filter element with a flat material according to claim 1.

10. The filter element according to claim 9,
**characterized in that**
the flat material has a hollow cylindrical shape and is connected, on at least one front face, to an end disc, wherein a second fabric strip (11) is at least partially covered by the end disc.

11. The filter element according to claim 10,
**characterized in that**
the second fabric strip (11) is at least partially arranged in the adhesive bed of the end disc.

12. A filter, in particular hydraulic filter, with a filter element according to claim 9.

13. A method for producing a flat material for a filter element according to claim 1, in which a functional layer of the flat material is connected to a fabric layer, wherein for producing the fabric layer, in particular a protective fabric (31) and/or supporting fabric (30), a first fabric strip (10) and at least one second fabric strip (11) are woven, the threads of which, in particular weft threads (32), merge into one another, wherein a switch is made during weaving from a first type of weave of the first fabric strip (10) to a second type of weave of the second fabric strip (11), which differs from the first type of weave.

## Revendications

1. Matériau plat pour un élément filtrant, sachant que le matériau plat comporte une forme ondulée ou pliée avec une pluralité de plis (17) ou ondulations passant parallèlement les uns aux autres , qui forment des pointes de plis ou d'ondulations (18) et des creux de plis ou d'ondulations (19) successifs, qui sont respectivement reliés entre eux par un flanc de pli, sachant que le matériau plat peut être traversé par un fluide et comporte au moins une couche fonctionnelle pour enlever des matières étrangères du fluide, sachant que la couche fonctionnelle est reliée à au moins une couche de tissu, qui comporte une première bande de tissu (10), en particulier un tissu principal, et au moins une deuxième bande de tissu (11), dont les fils, en particulier les fils de trame (32) passent les uns dans les autres, sachant que la première bande de tissu (10) comporte un premier type d'armure et la deuxième bande de tissu (11) un deuxième type d'armure, qui est différent du premier type d'armure.

2. Matériau plat selon la revendication 1,
**caractérisé en ce que**
la deuxième bande de tissu (11) forme une armure de fixation, qui fixe les fils, en particulier les fils de chaîne (33), de la première bande de tissu (10), sachant que le deuxième type d'armure de la deuxième bande de tissu (11) comprend une liaison de lin ou une armure de gaze.

3. Matériau plat selon la revendication 1 ou 2,
**caractérisé en ce que**
la deuxième bande de tissu (11) forme le bord de la face avant de la couche de tissu.

4. Matériau plat selon l'une quelconque des revendications précédentes,
**caractérisé en ce que**
plusieurs deuxièmes bandes de tissu (11) sont disposées à distance, sachant qu'une première bande de tissu (10) est disposée entre deux deuxièmes bandes de tissu (11).

5. Matériau plat selon l'une quelconque des revendications précédentes,
**caractérisé en ce que**
la première bande de tissu (10), en particulier le tissu principal, comporte une surface plus grande que la deuxième bande de tissu (11).

6. Matériau plat selon l'une quelconque des revendications précédentes,
**caractérisé en ce que**
la première bande de tissu (10), en particulier le tissu principal, forme dans l'usage une zone de traversée du matériau plat ondulé ou plié, qui peut être traversée par le fluide, sachant que la zone de traversée comporte une résistance à l'écoulement, qui est plus petite que la résistance à l'écoulement de la deuxième bande de tissu (11).

7. Matériau plat selon l'une quelconque des revendications précédentes,
**caractérisé en ce que**
le premier type d'armure de la première bande de tissu (10), en particulier du tissu principal, comprend une armure serge, en particulier une armure serge alternée, en particulier une armure serge à chevrons ou une armure satin.

8. Matériau plat selon l'une quelconque des revendications précédentes,
**caractérisé en ce que**
la première bande de tissu (10), en particulier le tissu principal, et/ou la deuxième bande de tissu (11), forme(nt) un tissu hybride avec les premiers et deuxièmes fils, sachant que les premiers fils, en particulier les fils de chaîne (33), sont formés de matière plastique et les deuxièmes fils, en particulier les fils de trame (32) de métal.

9. Elément filtrant avec un matériau plat selon la revendication 1.

10. Elément filtrant selon la revendication 9,
**caractérisé en ce que**
le matériau plat comporte une forme cylindrique creuse et est relié sur au moins une face avant à une plaque finale, sachant qu'une deuxième bande de tissu (11) est couverte au moins en partie par la plaque finale.

11. Elément filtrant selon la revendication 10,
**caractérisé en ce que**
la deuxième bande de tissu (11) est disposée au moins en partie dans le lit de colle de la plaque finale.

12. Filtre, en particulier filtre hydraulique, avec un élément filtrant selon la revendication 9.

13. Procédé de fabrication d'un matériau plat pour un élément filtrant selon la revendication 1, pour lequel une couche fonctionnelle du matériau plat est reliée à une couche de tissu, sachant que pour la fabrication de la couche de tissu, en particulier d'un tissu de protection (31) et/ou d'un tissu de support (30), une première bande de tissu (10) et au moins une deuxième bande de tissu (11) sont tissées, dont les fils, en particulier les fils de trame (32), passent l'un dans l'autre, sachant que lors du tissage on alterne d'un premier type d'armure de la première bande de tissu (10) à un deuxième type d'armure de la deuxième bande de tissu (11), qui est différent du premier type d'armure.
